# EUROPEAN PATENT SPECIFICATION

(11) **EP 1 568 922 B1**
(45) Date of publication and mention of the grant of the patent: **06.01.2010**
(21) Application number: 05075408.4
(22) Date of filing: 21.02.2005
(51) Int. Cl.: F16H 61/00, F16H 63/06

(54) **Control system for a gearshift**
Übersetzungsverhältnisänderung-Steuersystem
Système de commande de changement de vitesse

(30) Priority: 27.02.2004 IT MI20040365
(43) Date of publication of application: 31.08.2005
(73) Proprietor: PIAGGIO & C. S.p.A., 56025 Pontedera (Pisa) (IT)
(72) Inventor: Marcacci, Maurizio, 57128 Livorno (IT)
(74) Representative: De Gregori, Antonella

(56) References cited:
- EP-A- 1 184 603
- EP-A1- 0 639 732
- EP-A1- 0 731 296
- WO-A-99/02896
- DE-A1- 3 201 440
- DE-A1- 3 829 262
- DE-A1- 4 436 506
- DE-A1- 19 641 059
- GB-A- 2 260 379

## Description

The present invention refers to a control system for a gearshift.

In particular, the invention refers to a control system for a gearshift with either continuous or step variation.

The gearshift according to the present invention is of the type of a gearshift with expandable conical pulleys using a transmission belt, for example for a two-wheeled vehicle like a scooter.

DE-A-3829262 discloses a control system for a continuously variable gearshift having the features of the preamble of claim 1.

The principle upon which the operation of the gearshift is based is that of modifying the drive of the vehicle moment by moment, as the load that acts upon it (driver, fuel, baggage), the slope of the road, the aerodynamic resistance, etc. varies.

In general terms, therefore, the gearshift acts to adjust the speed of rotation of the drive shaft to that of the driving wheel, and thus takes on the function of a torque multiplier, or rather of a device that must provide a greater "driving force" where the power of the engine is insufficient to make the vehicle advance.

The presence of such a device is thus linked to the progression of the torque curve of the engine, i.e. to the absolute value of the torque supplied at the various rotation speeds of the engine itself.

By the term torque we mean the turning moment that the drive shaft can transmit for each thrust imparted upon the piston due to the explosion of the air and petrol mixture. This transfers a force to the drive shaft that, multiplied by the "crank arm", generates a torque or moment.

From the analysis of the torque and power curves of each engine it can be understood how, given the not regular but variable progression that is sensitive to the variation in the number of revolutions, motorcycle engines are only able to supply a substantial torque when the engine rotates at a somewhat high speed.

The mechanical gearshift allows the best compromise between the resistances involved and the travel speed to be sought.

Thanks to the gearshift, the power delivered by the engine is sent to the driving wheel passing firstly from the primary transmission, then reaching the rear wheel of the motorcycle by means of the final transmission.

Over the years, different technical choices have been adopted by manufacturers to make the gearshift, and amongst these gearboxes, in particular direct drive or cascade gearboxes, are well established.

Without going into the description of a gearbox, we just quote the fact that its purpose is that of modifying, according to requirements, the transmission ratio between the propulsion system and the wheels, so that each number of revolutions of the engine corresponds to a different number of revolutions of the wheels.

In the case of a two-wheeled vehicle, to send the rear wheel a high drive torque, when this is particularly necessary, for example when starting off or when going uphill, a multi-ratio gearshift is used.

In such a way, by engaging a low gear a substantial reduction in rotation speed between the entry shaft of the gearshift and the exit shaft is obtained, to which, however, a proportional increase in torque corresponds, whereas with higher gears on the other hand the rear wheel moves quickly but transmits a rather low torque.

During travel it is thus possible to maintain a rotation speed of the engine corresponding to a suitable delivery of power for each travel speed of the vehicle.

The best results in terms of acceleration and response by the vehicle are obtained by selecting the ratio that allows the propulsion system to rotate within a range of revolutions between a value close to which there is maximum torque and one close to which there is maximum power.

In recent times, the continuous speed variator has been developed that in the form of a centrifugal variator, simply known as a "variator", has become one of the most well established transmission systems amongst low and medium cylinder capacity motor vehicles thanks to the advantages that it offers in terms of acceleration and fuel-efficiency.

Such a device is substantially a progressive gearshift able to develop a continuous, and therefore infinite, range of ratios between a minimum and a maximum, established at the design stage.

The variations of ratios, indeed, is therefore not discrete, i.e. made so that a precise selected ratio corresponds to a well defined but continuous transmission ratio, according to the torque transmission ratio required to overcome the external resistances that the vehicle encounters (slopes, variations in weight, rough ground, etc.).

Generally, a variator consists of two pulleys and a trapezoidal belt, each pulley consisting of two plates with frusto-conical profile, facing each other so as to constitute a throat on which the transmission belt is to be wound.

Of the two plates one is fixed whereas the other is free to move axially. In such a way, for every movement of the mobile plate there is a variation in diameter of the pulley, passing from the point of maximum vicinity (greater diameter) to the point of maximum distance (smaller diameter).

Some centrifugal masses take care of causing such movement in the drive pulley, which, by the effect of the centrifugal force, slide inside suitable guides formed integral with the mobile plate.

The movement of the mobile plate closer to or further away from the fixed plate on the drive pulley causes, through the trapezoidal belt, the opposite movement of the mobile plate on the driven pulley, the mobile plate being held pressed against the fixed one thanks to the force applied by a spring. The consequent variation in the winding radii of the trapezoidal belt on the pulley generates the corresponding variation in the transmission ratio.

Therefore, as both the centrifugal masses that act on the plate of the drive pulley and the rigidity of the spring that holds the plates of the driven pulley close together vary, the advantageous simplicity of variation of the acceleration that this type of transmission can generate can be understood.

Continuously variable transmissions (CVT) are made according to numerous types, all of which are suitable for improving the performance of the vehicle thanks to an increase in the fuel efficiency and to a reduction in emissions, obtained thanks to the possibility of keeping the engine always on the best thermal yield values.

Such CVT automatic gearshifts, with respect to conventional gearboxes, also allow a reduction in polluting emissions to be obtained.

The Applicant has, however, noted that it is necessary to apply a certain speed ratio variation law, which takes into account the numerous parameters such as those caused by the interaction between belt and pulley, to evaluate the forces and therefore the dynamic behaviour of the transmission to which the device is subjected, so as to be able to apply the correct axial thrusts to the expandable pulleys.

In a gearshift with automatic variation of the ratio according to the prior art, the movement of the mobile part of the drive pulley is carried out by inertia by a centrifugal regulator system with a variable number of small masses, in the form of balls or rollers, which therefore restrict its functionalities not allowing the intervention of the driver or of suitable devices.

The Applicant has made a control system for a gearshift in a vehicle in which the variation of the speed ratios is controlled electronically by a gearshift control unit, which can select the operation of the gearshift both continuously and in steps.

For the purposes of the present invention, by "continuous operating mode" we mean that the gearshift is able to develop a continuous, and therefore infinite, range of ratios between a predetermined minimum and maximum.

For the purposes of the present invention, by "operating mode in steps" we mean that the gearshift is able to develop a predetermined range of ratios, for example like a conventional sequential gearshift.

Moreover, the control system according to the present invention allows, within the continuous operating mode, the selection of at least one predetermined operating setting that can be selected from a plurality of pre-memorised settings.

An aspect of the present invention concerns a control system for a continuously variable gearshift of the type with expandable conical pulleys for an internal combustion engine, said gearshift comprising a pair of pulleys, a drive pulley and a driven pulley respectively, between which runs a transmission belt and an electric motor (61) suitable for controlling the variation in the winding radii of the belt on the pulleys generates the corresponding variation in the transmission ratio of said gearshift, characterised in that it comprises a position sensor of the drive pulley and a sensor of the number of revolutions of the driven pulley, am electronic control unit of the gearshift capable of communicating with a control unit of the engine and of acquiring the data from said sensors, a command unit of the gearshift and a display through which said control unit of the gearshift selects one of a plurality of operating modes.

The characteristics and advantages of the control system according to the present invention shall become clearer from the following description, given as an example and not for limiting purposes, referring to the attached schematic drawings, in which:

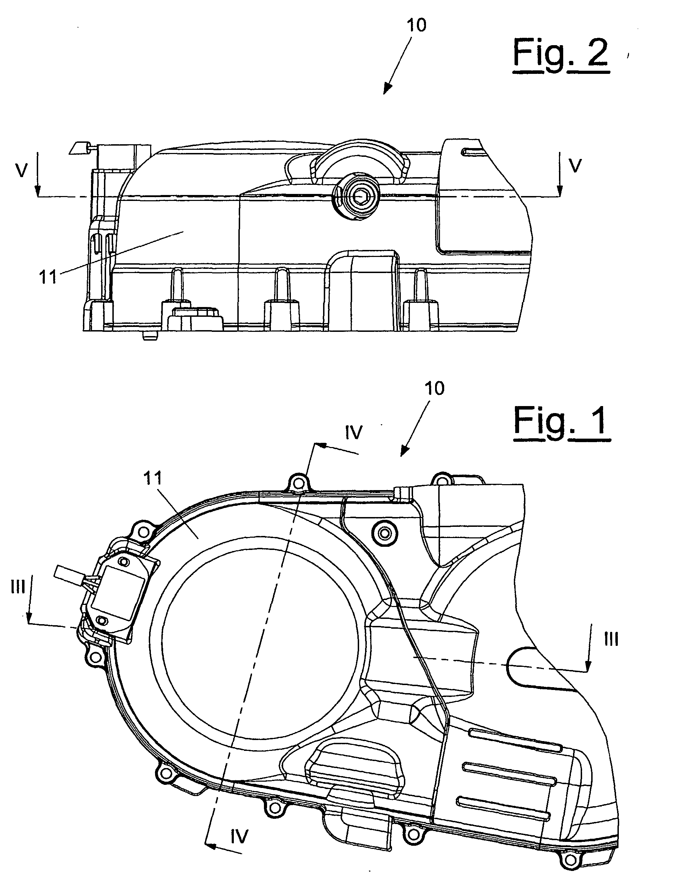

- figure 1 is a schematic side view of an engine portion carrying the gearshift according to the present invention;
- figure 2 is a view from below of the engine portion of figure 1;
- figure 3 is a section view, depicting the gearshift according to the invention, made according to the line III-III of figure 1;
- figure 4 is a section view, depicting the gearshift according to the invention, made according to the line IV-IV of figure 1;
- figure 5 is a section view, depicting the gearshift according to the invention, made according to the line V-V of figure 2;
- figure 6 is a block diagram of the control system according to the present invention.

With reference to the figures, a two or four stroke internal combustion engine 10 is partially illustrated, the engine having housed in a suitably shaped casing 11 a continuously variable gearshift of the type with expandable conical pulleys, generically indicated with 20.

The gearshift 20 according to the invention comprises two pairs of conical pulleys of which just the drive pulley 32 is illustrated, mounted on an entry shaft 51 of the gearshift.

The illustrated drive pulley in turn comprises an axially mobile element 32' and a fixed element 32'', both in the form of frusto-conical discs and facing each other so as to constitute a throat in which slides a belt 31, preferably a trapezoidal belt.

In the drive pulley 32 the mobile element 32' is moved axially, so as to vary the winding radii of the trapezoidal belt 31 on the drive and driven pulleys, and consequently the transmission ratio.

The movement of the mobile element 32' of the drive pulley 32 corresponds to an opposite displacement of the mobile part of the driven pulley, a movement that is counteracted by a spring and by a torque interlocking system suitably sized to exert sufficient pressure to avoid the sliding of the belt on the pulleys.

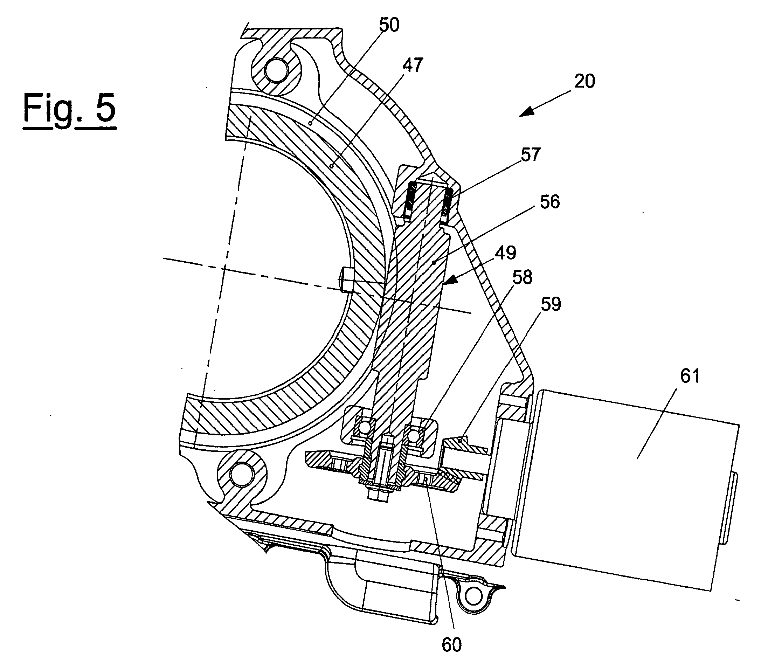

With particular reference to figure 5, a suitable electric motor 61, through a suitable transmission made, as a non-exclusive example embodiment, from a pair of conical wheels 59, 60, makes a small shaft 56 move, said small shaft being supported by two rolling bearings 57 and 58 and carrying a worm screw 49.

The worm screw 49 in turn makes a helical wheel 50, integral or made in a single piece with a cylindrical outer bushing 47, rotate.

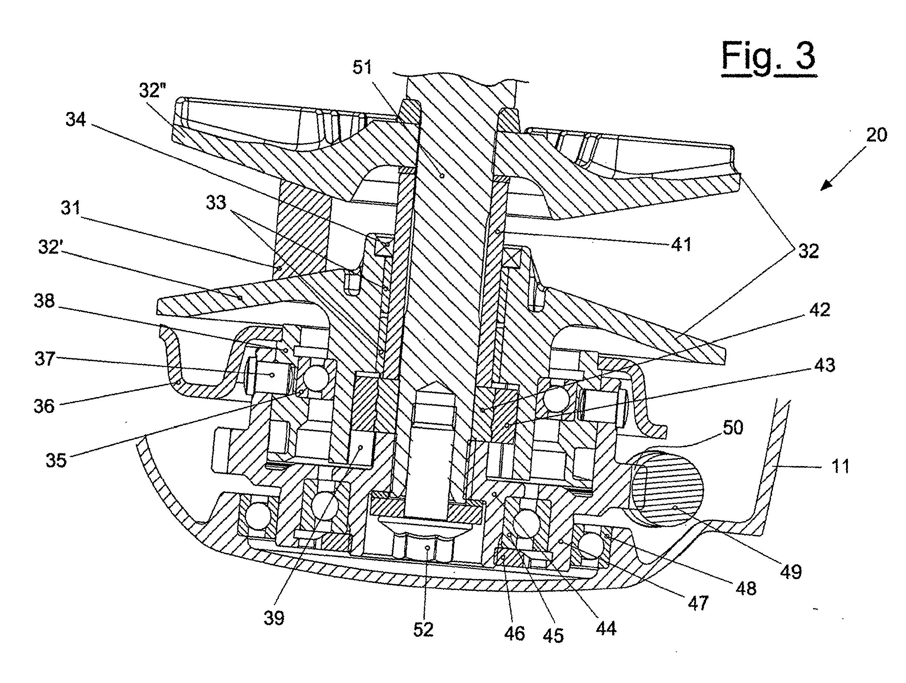

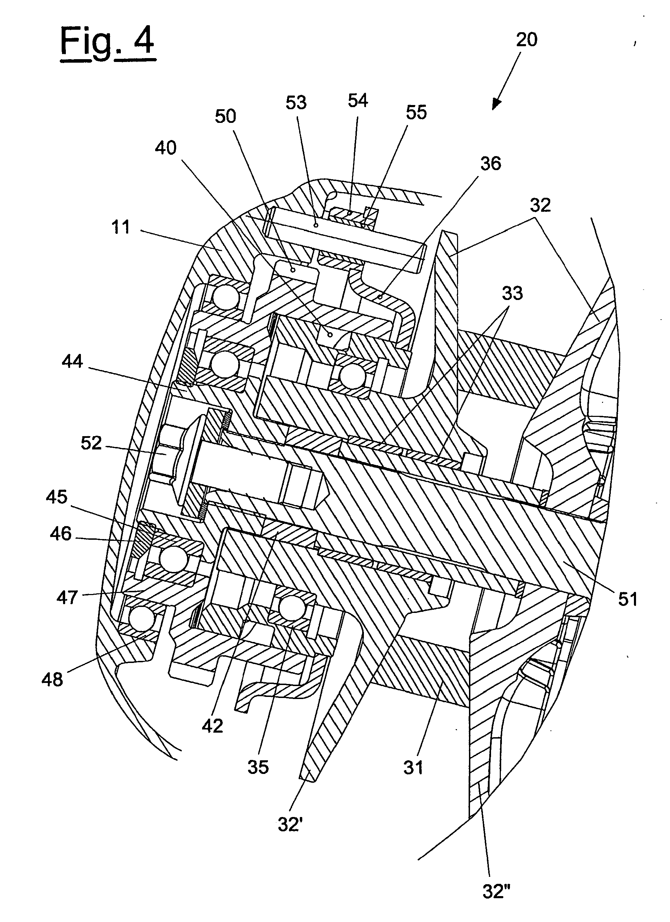

With reference also to figures 3 and 4, such an outer bushing 47 is supported by a rolling bearing 45 at one end and rotates on a cylindrical coaxial inner bushing 38.

The rolling bearing 45 is mounted on a bearing-carrying bushing 44 and locked through a ring nut 46.

The bearing-carrying bushing 44 is firmly connected to the entry shaft of the gearshift 51 by a screw 52. The bearing 48 constitutes an additional support for the entire command system of the gearshift.

The outer bushing 47 carries housings that receive two or more cylindrical pins 37. The cylindrical pins 37 engage in helical slots 40 formed in the cylindrical inner bushing 38; the latter is locked against rotation through a flange 36, rigidly fixed to it, which carries a bushing 54 in which slides a pin 53 fixed to the casing 11 in the housing portion of the gearshift, through the interposition of a suitable ring 55 suitably made from anti-friction material.

The mobile element 32' of the drive pulley 32 is firmly connected axially to the inner bushing 38, through the interposition of a bearing 35.

Such a mobile element 32' slides axially on the spacer 41, coaxial with the entry shaft 51 of the gearshift 20.

The anti-friction bushings 33 are positioned between the spacer 41 and the mobile element 32' of the drive pulley 32.

The mobile element 32' is firmly connected to the entry shaft of the gearshift 51 through a pulling joint comprising a pulling ring 42 and a plastic sliding block 43 radially fixed to the entry shaft 51 of the gearshift and a sliding block 43 preferably made from plastic material, radially fixed to the entry shaft 51 of the gearshift, said sliding block being arranged so as to engage in axial recesses 39 formed in the mobile element 32' of the drive pulley 32.

The pulling joint 42, 43 is lubricated through suitable grease that contributes to improving the sliding of the anti-friction bushes 33 on the spacer 41, and that is suitably contained by an oil seal 34, mounted on one of the ends of the hole of the mobile element 32' of the drive pulley 32 and by the screens of the rolling bearings 45.

The gearshift 20 according to the preferred embodiment of the invention has the following operation.

The electric motor 61, commanded by an electronic control unit, places the small shaft 56 carrying the worm screw 49 in rotation.

In turn, the worm screw 49 places the helical wheel 50 rotate integral with the outer bushing 47, which rotates on the bearing 45 and on the inner bushing 38.

The holes, two or more in number, which house the cylindrical pins 37, which engage the helical slots 40 formed in the inner bushing 38, are formed on the outer bushing 47.

Through the coupling between cylindrical pins 37 and helical slots 40, the torque delivered by the electric motor 61, multiplied through the coupling between the worm screw 49 and the helical wheel 50, is decomposed into an axial force, i.e. directed along the rotation axis of the pulley 32, and into a tangential component, these actions being exerted on the inner bushing 38.

Such an inner bushing 38 cannot rotate on its own axis since the flange 36, to the ends of which the bushing 54 is fixed and inside which the pin 53 fixed to the wall of the casing 11 slides, is rigidly fixed to it, in such a way the tangential forces between inner bushing 38 and cylindrical pins 37 being counteracted.

The axial component of the forces between cylindrical pins 37 and helical slots 40 of the inner bushing 38 thus causes a translation of the inner bushing itself.

This axial movement can take place in the two directions, according to the direction of rotation of the outer bushing 47, or else according to the direction of rotation of the electric motor 61 that commands the gearshift.

The axial movement of the inner bushing 38 is transferred to the mobile element 32' of the drive pulley 32 through the rolling bearing 35.

This axial movement of the mobile element 32' causes the variation of the winding radius of the trapezoidal belt 31 and consequently the variation of the transmission ratio between the drive pulley 32 and the driven pulley.

During the displacement of the mobile element 32' of the drive pulley 32 under the action of the electric motor 61, the contact between the trapezoidal belt 31 and the pulley itself is ensured by the load applied on it by the counteraction spring present in the driven group.

The driving torque is transferred from the entry shaft of the gearshift 51 to the mobile element 32' of the drive pulley 32 through the puller 42 and the sliding block 43.

In such a way the sliding prismatic coupling between entry shaft 51 of the gearshift and the mobile element 32' of the drive pulley 32 is ensured.

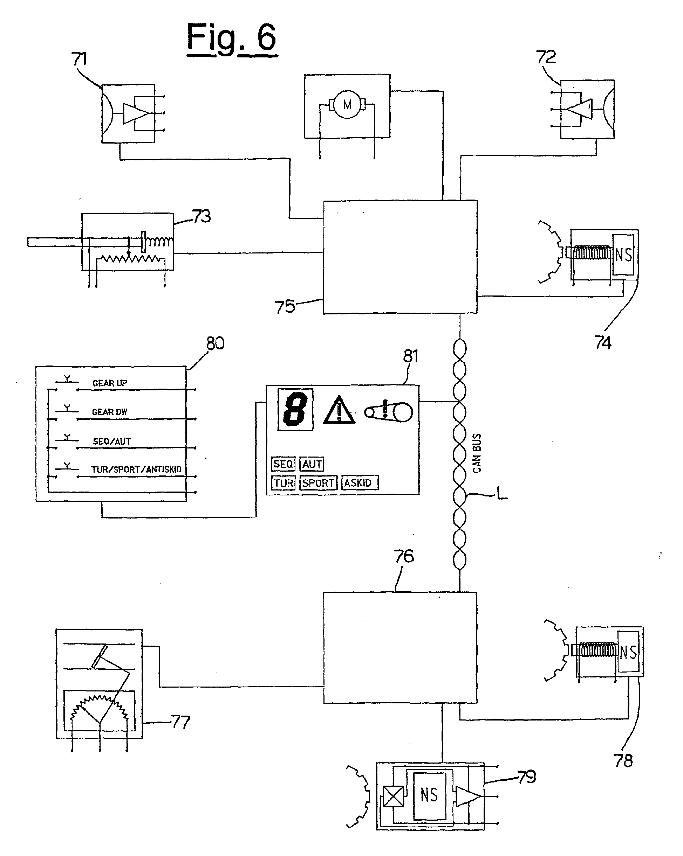

The control system according to the present invention, illustrated as an example in figure 6, comprises a first pressure sensor 71 for the front brake, a second pressure sensor 72 for the back brake, a position sensor 73 of the drive pulley and a sensor of the number of revolutions 74 of the driven pulley.

The signals of such sensors are acquired by a control unit 75 of the gearshift, which communicates, for example through a CAN L line, with a control unit of the engine 76. In such a way, the control system of the gearshift carries out processing autonomously with respect to the engine control unit, but it is able to acquire information, through said CAN line of the same engine control unit. Indeed, the engine control unit communicates with a position sensor of the butterfly valve 77, from a sensor of the revolutions of the drive shaft 78 and from a sensor of the revolutions on the hub 79 that relates to the speed of the vehicle. The control system according to the present invention also comprises a user-controlled command unit 80 and a display 81, for example a digital control panel that communicates with said control unit of the gearshift, for example through the aforementioned CAN line.

The control unit of the gearshift can select the continuously variable or else sequential (in steps) operation of the gearshift.

Moreover, in the configuration of continuously variable operation it is possible to select a plurality of differentiated settings. For example, it is possible to select a "touring" setting a "sports" setting, an "anti-skid" setting, etc. Such settings configure different gearshifting speeds.

During braking with the butterfly closed by the gas, the control system of the gearshift shortens the ratio by a percentage, according to the braking power, so as to ensure an "engine braking" effect and quick restarting due to the engine being kept at high revolutions.

Moreover, the ratios of step operation are predetermined, and it is not possible to insert a lower ratio if the speed of rotation of the engine is greater than a predetermined value. In the same way, it is not possible to insert a higher ratio if the speed of rotation of the engine is lower than a predetermined limit.

In the passage to continuously variable operation from step operation, the system remains in the ratio occupied at the time of the change of mode.

In the step operating mode a predetermined ratio lower than the one in use is automatically inserted at a speed at which, conserving the same ratio, the engine would tend to shut down.

Moreover, in continuous operating mode, in the case in which the user acts upon the ratio selection command going uphill, the step operating mode is automatically selected.

The presence of the position sensor of the mobile drive half-pulley and of a sensor of the number of revolutions at the driven pulley allows the control system to have a double control on the ratio in use of the gearshift.

Moreover, it is possible to check the state of wear of the belt through the comparison of the transmission ratio measured at start-up with the predetermined theoretical one, allowing a possible compensation of the wear and warning the driver if it exceeds a predetermined value.

The control system is able to select an emergency operating mode, in which if a failure does not allow the system to operate correctly a ratio that allows safe travel of the vehicle is selected.

Moreover, the control system of the gearshift is able to monitor the current absorbed by the electric motor 61 so as to highlight possible malfunctions of the gearshift.

The gearshift 20 according to the invention allows the aforementioned centrifugal speed variator to be replaced with a device that allows the operating mode of the gearshift to be controlled from the outside.

Such a control provides different command strategies of the gearshift, able to be freely selected by the driver of the vehicle and able to be actuated as well as controlled through an electronic control unit.

## Claims

1. Control system for a continuously variable gearshift of the type with expandable conical pulleys for an internal combustion engine, said gearshift comprising a pair of pulleys, one drive pulley and one driven pulley respectively, between which slides a transmission belt (31), an electric motor (61) suitable for controlling the variation of the winding radii of the belt on the pulleys, generating the corresponding variation of the transmission ratio of said gearshift, the control system comprising
a position sensor (73) of the drive pulley and a sensor of the number of revolutions (74) of the driven pulley,
an electronic control unit (75) of the gearshift able to communicate with an engine control unit (76) and to acquire the data from said sensors, **characterised in that** the control system further comprises a command unit (80) of the gearshift and a display (81) through which said control unit (75) of the gearshift selects one of a plurality of operating modes,
a first pressure sensor (71) for the front brake, a second pressure sensor (72) for the back brake, and **in that** the electronic control unit (75) of the gearshift is provided with means which, during braking with the butterfly closed by the gas, shorten the ratio by a percentage, according to the braking power, so as to ensure an "engine braking" effect and quick restarting due to the engine being kept at high revolutions.

2. Control system according to claim 1, wherein said control unit (75) of the gearshift acquires data relative to the position of the butterfly valve, to the number of revolutions of the drive shaft and to the number of revolutions on the hub (79) through said engine control unit (76).

3. Control system according to claim 1, wherein said plurality of operating modes comprises a continuous operating mode and an operating mode in steps having a plurality of predetermined ratios.

4. Control system according to claim 1, wherein said control unit (75) of the gearshift communicates with said engine control unit (76) through a CAN line.

5. Control system according to claim 1, wherein said sensors, said command unit (80) and said display (81) communicate with said control unit (75) of the gearshift through a CAN line.

6. Control system according to claim 3, wherein said continuous operating mode comprises a plurality of differentiated settings that configure different gearshifting speeds.

7. Control system according to claim 3, wherein in continuous operating mode, in the case in which the user acts upon such a command unit (80) for the selection of a ratio going uphill, the step operating mode is automatically selected.

8. Control system according to claim 1, wherein said plurality of operating modes comprises an emergency operating mode, in which a ratio is selected that allows the vehicle to travel safely.

## Patentansprüche

1. Steuersystem für eine stufenlos veränderliche Getriebeschaltung vom Typ mit expandierbaren konischen Scheiben für eine Verbrennungskraftmaschine mit innerer Verbrennung, die Getriebeschaltung umfassend ein Paar von Scheiben, eine Antriebsscheibe bzw. eine angetriebene Scheibe, zwischen denen ein Transmissionsriemen (31) gleitet, einen Elektromotor (61), geeignet zum Steuern und/oder Regeln der Veränderung der Windungsradien des Riemens an den Scheiben, so dass die korrespondierende Veränderung des Übersetzungsverhältnisses der Getriebeschaltung erzeugt wird, wobei das Steuersystem umfasst:
einen Positionssensor (73) der Antriebsscheibe und einen Drehzahlsensor (74) der angetriebenen Scheibe,
eine elektronische Steuer- und/oder Regeleinheit (75) der Getriebeschaltung, welche dazu in der Lage ist, mit einer Motorsteuer- und/oder -regeleinheit (76) zu kommunizieren und Daten von den Sensoren zu akquirieren,
**dadurch gekennzeichnet, dass** das Steuersystem ferner umfasst:
eine Befehlseinheit (80) der Getriebeschaltung und eine Anzeige (81), durch welche die Steuer- und/oder Regeleinheit (75) der Getriebeschaltung einen von einer Mehrzahl von Betriebsmodi selektiert,
einen ersten Drucksensor (71) für die vordere Bremse, einen zweiten Drucksensor (72) für die hintere Bremse, und **dadurch**, dass
die elektronische Steuer- und/oder Regeleinheit (75) der Getriebeschaltung mit einem Mittel versehen ist, welches während des Bremsens mit durch das Gas geschlossener Schmetterlingsklappe das Verhältnis um einen Prozentsatz gemäß der Bremsleistung verkürzt, um einen "Motorbrems"-Effekt und schnellen Neustart sicherzustellen als Folge dessen, dass der Motor bei hohen Umdrehungen gehalten wird.

2. Steuersystem nach Anspruch 1, wobei die Steuer- und/oder Regeleinheit (75) der Getriebeschaltung Daten relativ zu der Position des Schmetterlingsklappenventils, der Drehzahl der Antriebswelle und der Drehzahl der Nabe (79) durch die Motorsteuer- und/oder -regeleinheit (76) akquiriert.

3. Steuersystem nach Anspruch 1, wobei die Mehrzahl von Betriebsmodi einen kontinuierlichen Betriebsmodus und einen Betriebsmodus in Stufen mit einer Mehrzahl von vorab bestimmten Verhältnissen umfasst.

4. Steuersystem nach Anspruch 1, wobei die Steuer- und/oder Regeleinheit (75) der Getriebeschaltung mit der Motorsteuer- und/oder -regeleinheit (76) durch eine CAN-Leitung kommuniziert.

5. Steuersystem nach Anspruch 1, wobei die Sensoren, die Befehlseinheit (80) und die Anzeige (81) mit der Steuer- und/oder Regeleinheit (75) der Getriebeschaltung durch eine CAN-Leitung kommunizieren.

6. Steuersystem nach Anspruch 3, wobei der kontinuierliche Betriebsmodus eine Mehrzahl von differenzierten Einstellungen umfasst, welche verschiedene Getriebeschaltgeschwindigkeiten konfigurieren.

7. Steuersystem nach Anspruch 3, wobei in dem kontinuierlichen Betriebsmodus in dem Falle, in dem der Benutzer auf eine derartige Befehlseinheit (80) wirkt für die Selektion eines bergauf gehenden Verhältnisses, der Stufenbetriebsmodus automatisch selektiert wird.

8. Steuersystem nach Anspruch 1, wobei die Mehrzahl von Betriebsmodi einen Notbetriebsmodus umfasst, in welchem ein Verhältnis selektiert wird, welches das Fahrzeug sicher fahren lässt.

## Revendications

1. Système de commande pour un changement de vitesse à variation continue du type doté de poulies coniques extensibles pour un moteur à combustion interne, ledit changement de vitesse comprenant une paire de poulies, respectivement une poulie d'entraînement et une poulie menée, entre lesquelles coulisse une courroie de transmission (31), un moteur électrique (61) convenant pour commander la variation des rayons d'enroulement de la courroie sur les poulies, générant la variation correspondante du rapport de transmission dudit changement de vitesse, le système de commande comprenant
un capteur de position (73) de la poulie d'entraînement et un capteur du nombre de tours (74) de la poulie menée,
une unité de commande électronique (75) du changement de vitesse capable de communiquer avec une unité de commande du moteur (76) et d'obtenir les données provenant desdits capteurs, **caractérisé en ce que** le système de commande comprend en outre
une unité de commande (80) du changement de vitesse et un affichage (81) par l'intermédiaire duquel ladite unité de commande (75) du changement de vitesse sélectionne un mode parmi une pluralité de modes de fonctionnement,
un premier capteur de pression (71) pour le frein avant, un deuxième capteur de pression (72) pour le frein arrière, et **en ce que** l'unité de commande électronique (75) du changement de vitesse est munie d'un moyen qui, pendant le freinage avec l'obturateur fermé par les gaz, réduit le rapport d'un certain pourcentage, en fonction de la puissance de freinage, afin de garantir un effet de "frein moteur" et un redémarrage rapide du fait que le moteur continue de tourner à un régime élevé.

2. Système de commande selon la revendication 1, dans lequel ladite unité de commande (75) du changement de vitesse obtient les données relatives à la position du volet obturateur, au nombre de tours de l'arbre d'entraînement et au nombre de tours sur le moyeu (79) par l'intermédiaire de ladite unité de commande du moteur (76).

3. Système de commande selon la revendication 1, dans lequel ladite pluralité de modes de fonctionnement comprend un mode de fonctionnement continu et un mode de fonctionnement par paliers ayant une pluralité de rapports prédéterminés.

4. Système de commande selon la revendication 1, dans lequel ladite unité de commande (75) du changement de vitesse communique avec ladite unité de commande du moteur (76) par l'intermédiaire d'une ligne CAN.

5. Système de commande selon la revendication 1, dans lequel lesdits capteurs, ladite unité de commande (80) et ledit affichage (81) communiquent avec ladite unité de commande (75) du changement de vitesse par l'intermédiaire d'une ligne CAN.

6. Système de commande selon la revendication 3, dans lequel ledit mode de fonctionnement continu comprend une pluralité de réglages différenciés qui configurent différentes vitesses de changement de vitesse.

7. Système de commande selon la revendication 3, dans lequel dans le mode de fonctionnement continu, dans le cas où l'utilisateur agit sur une unité de commande (80) de ce type pour la sélection d'un rapport en montée, le mode de fonctionnement par paliers est automatiquement sélectionné.

8. Système de commande selon la revendication 1, dans lequel ladite pluralité de modes de fonctionnement comprend un mode de fonctionnement d'urgence, dans lequel un rapport est sélectionné qui permet au véhicule de se déplacer en toute sécurité.
